Europäisches Patentamt

European Patent Office

Office européen des brevets

(19)

(11) **EP 0 525 900 B1**

(12) # EUROPÄISCHE PATENTSCHRIFT

(45) Veröffentlichungstag und Bekanntmachung des Hinweises auf die Patenterteilung:
**11.11.1998 Patentblatt 1998/46**

(51) Int Cl.⁶: **H04N 7/24**, H04N 7/30

(21) Anmeldenummer: **92202298.3**

(22) Anmeldetag: **24.07.1992**

(54) **Filterschaltung zur Vorverarbeitung eines Videosignals**

Filter circuit for preprocessing a video signal

Circuit de filtrage pour le pré-traitement d'un signal vidéo

(84) Benannte Vertragsstaaten:
**DE FR GB**

(30) Priorität: **02.08.1991 DE 4125566**

(43) Veröffentlichungstag der Anmeldung:
**03.02.1993 Patentblatt 1993/05**

(73) Patentinhaber:
- **Philips Patentverwaltung GmbH**
  **22335 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder: **Vogel, Peter,**
**c/o Philips Patentverwaltung GmbH**
**W-2000 Hamburg 1 (DE)**

(74) Vertreter: **Volmer, Georg, Dipl.-Ing. et al**
**Philips Patentverwaltung GmbH,**
**Röntgenstrasse 24**
**22335 Hamburg (DE)**

(56) Entgegenhaltungen:
**EP-A- 0 517 324**  **FR-A- 2 589 020**
**FR-A- 2 649 848**

- **PROCEEDINGS OF THE PICTURE CODING SYMPOSIUM April 1986, TOKYO Seiten 28 - 29 YASHIMA ET AL.: 'Adaptive prefiltering for HDTV signal coding'**
- **IEEE JOURNAL ON SELECTED AREAS IN COMMUNICATIONS Bd. 5, Nr. 7, August 1987, Seiten 1155 - 1165 CHEN ET AL. 'Recursive Temporal Filtering and Frame Rate Reduction for Image Coding'**
- **PATENT ABSTRACTS OF JAPAN vol. 15, no. 37 (P-1159)29. Januar 1991 & JP-A-2 275 588 ( TOSHIBA CORPORATION ) 9. November 1990**

## Beschreibung

Die Erfindung betrifft eine Anordnung zur Kodierung von Videosignalen nach dem Oberbegriff des Patentanspruchs 1.

Eine Anordnung zur Kodierung von Videosignalen mit einer solchen Filterschaltung ist z.B. bei Bildtelefonen einsetzbar; sie soll in diesem Fall das von der Videokamera herrührende Rauschen reduzieren, da dieses die anschließende Kodierung durch einen Hybrid-Kodierer erheblich stört.

Eines für Hybrid-Kodierer infrage kommenden Kodierverfahren ist in der CCITT-Empfehlung H.261 näher beschrieben (vgl. z.B.: Draft Revision of Recommendation H.261: Videocodec for audiovisual services at p*64 kbit/s. Signal Proceeding: Image Communication II (1990) 221-239. Elsevier Science Publishers B.V.). In dieser Empfehlung sind auch die für die Durchführung des Verfahrens notwendigen Bausteine sowie deren Funktionen angegeben. Eine mit der H.261-Empfehlung verträgliche Ausgestaltung eines Hybrid-Kodierers bzw. Dekodierers ist in der Druckschrift "Description of Reference Model 7", Specialist Group on Coding for Visual Telephony, CCITT SGXV, Working Party XV/4, Doc. 446, 1988 angegeben. Das erste dieser Dokumente wird im folgenden mit (D1) und das zweite mit (D2) zitiert werden.

Ein Hybrid-Kodierer besteht nach (D1) aus einem Quellenkoder, der einen Quantisierer enthält, einen Multiplex-Koder, der die vom Quellenkoder gelieferten Haupt- und Nebeninformationen in binäre Kodeworte umkodiert und zu einem seriellen Datenstrom zusammenfaßt, und aus einem darauffolgenden Pufferspeicher, der von einem Leitungskoder gefolgt wird.

Eine Kodiersteuerung steuert den Quellenkoder und den Multiplex-Koder in Abhängigkeit vom Füllstand des Pufferspeichers.

Der Name Hybrid-Kodierer beruht auf der gleichzeitigen Verwendung zweier Kodierprinzipien, nämlich dem Inter-Frame-Prinzip und dem Intra-Frame-Prinzip. Beim Inter-Frame-Prinzip wird die zeitliche Abhängigkeit der Videobilder und beim Intra-Frame-Prinzip die örtliche Abhängigkeit innerhalb der Videobilder genutzt.

Droht der Pufferspeicher leerzulaufen oder droht er überzulaufen, so wird die Quantisierungsschrittweite (Größe der Quantisierungsintervalle) feiner oder gröber gemacht, damit mehr oder weniger Daten anfallen. Die Steuerung erfolgt derart, daß die Quantisierungsschrittweite innerhalb eines Datenblocks bestimmter Größe (Makroblock) konstant bleibt.

Unter Datenblock werden hier Daten eines Ausschnitts aus einem Videobild verstanden. Dieser Ausschnitt ist z.B. ein quadratischer Teil des sichtbaren Videobildes. In (D1) (vgl. auch die EP-A-029 085) werden vier Arten von Datenblöcken unterschieden:

a) Blöcke, bestehend aus 64 Zahlenwerten, die entweder die Luminanzwerte eines quadratischen Bildausschnittes aus 8 x 8 Bildpunkten darstellen oder eine der beiden Chrominanzkomponenten eines quadratischen Bildausschnittes aus 16 x 16 Bildpunkten repräsentieren,

b) Makroblöcke, bestehend aus vier Luminanz- und zwei Chrominanzblöcken, die zusammen alle Daten eines quadratischen Bildausschnittes aus 16 x 16 Bildpunkten darstellen,

c) Blockgruppen, bestehend aus 33 Makroblöcken,

d) Videobilder, bestehend aus jeweils 396 Makroblöcken.

Im folgenden soll das Wort Datenblock sowohl im engeren Sinne nach (D1) verwendet werden als auch im weiteren Sinne, in dem die betreffenden Bildausschnitte beliebige Größe und Gestalt haben können.

Nach (D1) wird im Quellenkoder mit den Blöcken eine diskrete Kosinus-Transformation durchgeführt. Dies führt zu einer Bitratenreduktion aufgrund der räumlichen (besser: flächenhaften) Korrelationen, die innerhalb eines Videobildes bestehen, und stellt eine Konkretisierung des oben erwähnten Intra-Frame-Prinzips dar.

Die zeitliche Abhängigkeit aufeinanderfolgender Videobilder wird z.B. dadurch ausgenutzt, indem die Differenz der Daten von äquivalenten Bildpunkten zweier aufeinanderfolgender Videobilder erzeugt und weiterverarbeitet wird. Bildpunkte oder Datenblöcke von einander verschiedener Videobilder sollen als äquivalent bezeichnet werden, wenn sie den gleichen Koordinaten bzw. Adressen haben, d.h., wenn ihre Lage innerhalb eines Videobildes die gleiche ist.

Aus einem Artikel von Chen und Hein (Chen, W.-H. und Hein, D.: "Recursive temporal filtering and frame rate reduction for image coding", IEEE Journal on selected areas in Communcation, Vol. SAC-5, 1987, Seiten 1155 bis 1165) ist bekannt, welche positiven Auswirkungen eine temporale Filterung von Videobildern auf eine nachfolgende Kodierung haben kann. Unter temporaler Filterung - nur diese ist im folgenden gemeint - wird eine Filterung verstanden, bei der gefilterte Datenblöcke aus äquivalenten Datenblöcken gewonnen werden. In dem Artikel von Chen und Hein werden als Datenblöcke ganze Videobilder verwendet und es wird außerdem nur eine nichtadaptive Filterung untersucht.

Aus FR-A-2589020 ist ein Hybrid-Kodierverfahren zur Übertragung von datenreduzierten Bildern bekannt, bei dem Luminanz und Chrominanz-Signale eines Videosignals in einem temporalen rekursiven Filter vorgefiltert werden, um vorhandenes Quellenrauschen zu reduzieren. Mittels dieses Filter wird auch eine Regelung der Signalentropie vorgenommen, um von einer Kodiereinrichtung nicht benötigte Informationen nicht übertragen zu müssen. Die Regelung des Filters wird gesteuert durch ein Steuersignal, welches von der Kodiereinrichtung abgegeben wird, und die eine Funktion der momentanen Binärdatenrate auf der Übertragungsleitung ist.

Aus der EP-A-0 517 324, die zur Erfindung einen Stand der Technik nach Artikel 54 (3) und (4) EPÜ bildet, ist ebenfalls ein Hybridkodierer bekannt, bei dem ein, einer Kodiereinrichtung vorgeschaltetes temporales Filter, dem ein Videosignal zugeführt ist, von der Kodiereinrichung so angesteuert wird, daß die Filterwirkung des Filters dann entfällt, wenn die Differenz zwischen zwei gleichen, aber zeitlich aufeinanderfolgenden Stellen des Videosignals einen bestimmten Schwellwert überschreiten. Dies hat den Sinn, nur dann eine Filterung des Videosignals vorzunehmen, wenn die Unterschiede die herausgefiltert werden, vor allem auf Rauschen und nicht auf einer Szenenänderung beruhen.

Mit den bekannten temporalen Filtern, werden dem Videosignal überlagerte Rauschsignale in Abhängigkeit des Steuersignals ausgefiltert. Wie sich gezeigt hat, bleiben dennoch Störungen übrig, die besonders auffällig sind, wenn Bewegtbildszenen zur Ruhe kommen, d. h. in Standbilder übergehen. Bei einem solchen Übergang kann der Fall auftreten, daß das nach der Dekodierung auf einem Monitor wiedergegebene Standbild von unzumutbarer Qualität ist.

Der Erfindung liegt daher die Aufgabe zugrunde, eine Anordnung zur Kodierung von Videosignalen der eingangs genannten Art so auszugestalten, daß Störungen beim Übergang von Bewegtbildszenen in Standbilder vermieden werden.

Diese Aufgabe wird bei einer gattungsgemäßen Anordnung zur Kodierung von Videosignalen mit den kennzeichnenden Merkmalen des Patentanspruchs 1 gelöst. Die Kodiereinrichtung kann dabei speziell ein Hybrid-Kodierer oder auch eine sonstige Signalwandlungseinrichtung für ein Videosignal sein. Im Falle eines Hybrid-Kodierers erfolgt die Kodierung des Videosignales durch den Hybrid-Kodierer datenblockweise. Für die Filterung durch die Filterschaltung werden die Daten eines dekodierten Bildes benötigt, das in einem Bildspeicher des Hybrid-Kodierers gespeichert ist. Ebenfalls werden Bewegungsvektoren benötigt, die durch einen Bewegungsschätzer des Hybrid-Kodierers berechnet werden. Dabei wird das zu kodierende Videosigal beispielsweise durch den Hybrid-Kodierer datenblockweise kodiert, wobei der Hybrid-Kodierer einen Bildspeicher sowie einen Bewegungsschätzer zur Berechnung der Bewegungsvektoren enthält. Die Filterschaltung besteht aus einer Umschalteinrichtung mit zwei Eingängen, die entweder das zu kodierende Videosignal oder das gefilterte Videosignal an den Eingang des Hybrid-Kodierers und den Eingang eines weiteren Bildspeichers leitet. Der Bildspeicher liegt im Rückkopplungszweig eines rekursiven Filters, mit dem das zu kodierende Videosignal temporal gefiltert wird. Die Umschalteinrichtung wird von der Steuervorrichtung gesteuert, die als Eingangsdaten beispielsweise das zu kodierende Videosignal, die Bewegungsvektoren und die Daten aus dem Bildspeicher des Hybrid-Kodierers erhält. Durch die Filterschaltung kann ein beispielsweise von einer Videokamera herrührendes Rauschen wesentlich reduziert werden, so daß auch die Wiedergabe von Standbildern in verbesserter Qualität ermöglicht wird.

Weitere vorteilhafte Ausgestaltungen enthalten die Unteransprüche.

Im folgenden soll die Erfindung anhand der in den Figuren dargestellten Ausführungsbeispiele näher erläutert werden.

Es zeigen:

Fig. 1 ein Blockdiagramm eines Kodeks mit erfindungsgemäßen Ergänzungen,

Fig. 2 Details des Blockdiagramms eines Quellenkoders mit erfindungsgemäßen Ergänzungen,

Fig. 3 Details der erfindungsgemäßen Filterschaltung und

Fig. 4 Ergebnisse einer Simulation für eine Standardbildsequenz.

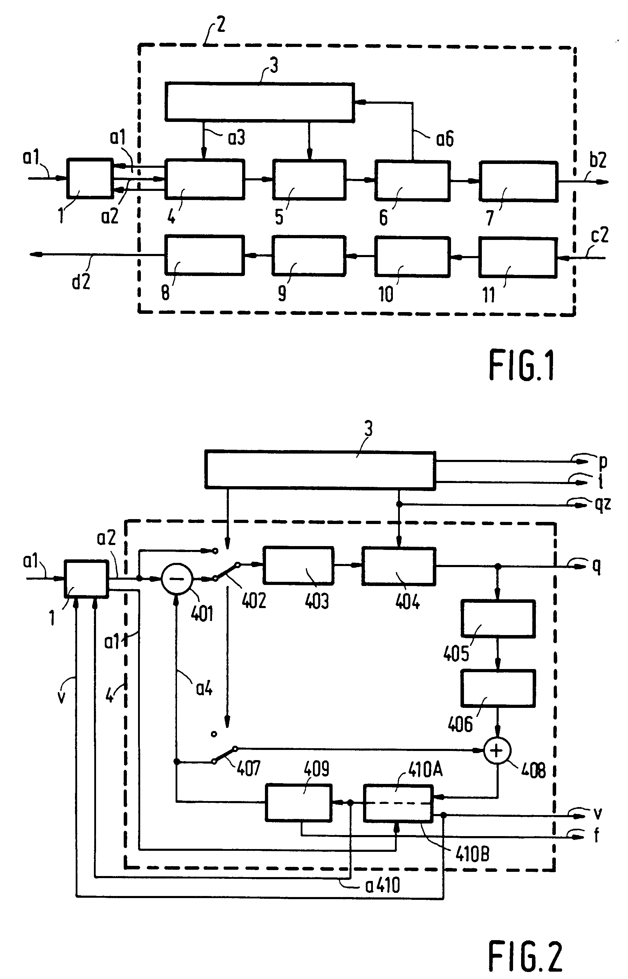

In Fig. 1 gehören die mit einer punktierten Linie umrandeten Bausteine zu einem Kodek 2, der alle Schaltungs- und Funktionsmerkmale enthält, die er laut (D1) haben soll. Die Bausteine 3, 4, 5, 6 und 7 gehören zum Hybrid-Kodierer des Kodeks 2 und die Bausteine 8, 9, 10 und 11 zum (Hybrid)-Dekodierer. Im folgenden werden für Leitungen, für die Anschlüsse dieser Leitungen und für die Signale, die über diese Leitungen übertragen werden, die gleichen Bezugszeichen verwendet.

Beim Baustein 4 handelt es sich um einen Quellenkoder, dessen Ausgangsdaten einem Multiplexer-Koder 5 zugeführt werden. Der Multiplex-Koder 5, der von einer Kodiersteuerung 3 gesteuert wird, kodiert seine Eingangsdaten binär und faßt sie zu einem seriellen Bitstrom zusammen, der laufend in den nachgeschalteten (Sende-) Pufferspeicher 6 eingelesen wird. Der Füllstand des Pufferspeichers 6 wird von der Kodiersteuerung 3 überwacht, die mit Hilfe der Füllstandsdaten auch den Quellenkoder 4 steuert, insbesondere den Quantisierer des Quellenkoders. Nach dem Auslesen des digitalen Videosignales aus dem Pufferspeicher 6 wird das Signal einem Leitungskoder 7 übergeben und über eine Leitung b2 an einen Empfänger übertragen.

Die zu kodierenden Videodaten werden über eine Leitung al einer erfindungsgemäßen Filterschaltung 1 makroblockweise zugeführt. Für ihre erfindungsgemäße Funktion benötigt die Filterschaltung 1 Daten, die der Quellenkoder 4 ermittelt, wie die Leitungen vom Quellenkoder 4 zur Filterschaltung 1 andeuten. Diese Daten müssen nach (D1) und (D2) auch ohne die Filterschaltung 1 bestimmt werden, so daß der Quellenkoder 4 nicht verändert werden muß. Nähere Angaben über die Funktion der Filterschaltung 1 erfolgen weiter unten.

Das zu dekodierende Videosignal wird auf einer Leitung c2 dem Dekodierer 8, 9, 10, 11 zugeführt. Es wird durch einen Leitungsdekoder 11 dekodiert, sodann in einen Empfangspuffer 10 eingeschrieben, von einem Multiplex-Dekoder 9 und von einem Quellendekoder 8 dekodiert und über eine Leitung d2 an einen nicht gezeigten Monitor überführt.

In Fig. 2 ist noch einmal ein Teil des Kodeks nach Fig. 1 schematisch dargestellt, und zwar handelt es sich um den Quellenkoder 4 mit der Kodiersteuerung 3 und der Filterschaltung 1. Die Kodiersteuerung 3 und der Quellenkoder 4 sind über Leitungen p, t, qz, q, v und f mit dem in Fig. 1 gezeigten Multiplex-Koder 5 verbunden. Über die Leitungen p, t, qz, v und f werden sogenannte Nebeninformationen übertragen und über die Leitung q Hauptinformationen. Näheres über die Art und die Bedeutung der Neben- und Hauptinformationen findet man in (D1).

Der Quellenkoder 4 enthält eine Transformationseinheit 403 und einen darauffolgenden Quantisierer 404. Mit diesen beiden Bausteinen wird bei einem Kodierer nach der H.261-Empfehlung ein entscheidender Anteil der Bitratenreduktion erreicht. Das Ausgangssignal, das aus Quantisierungsindices besteht, wird auf der Leitung q dem nachfolgenden Multiplexer 5 zugeführt. Eine Rückkopplungsschleife enthält eine Einheit 405 zur Gewinnung von quantisierten Abtastwerten aus den Quantisierungsindices. Danach wird mit den quantisierten Abtastwerten die Wirkung der Transformationseinheit 403 durch eine Einheit 406 rückgängig gemacht. Mit einem Addierer 408 und einem Bildspeicher 410A wird das blockweise dekodierte Bild blockweise im Bildspeicher 410A abgespeichert.

Ein Subtrahierer 401 bildet die Differenz der Daten eines Eingangsblocks a2 und der Daten eines über eine Leitung a4 durch ein Filter 409 gefilteren Prädiktionsblocks. Diese Differenz wird im folgenden Differenzblock genannt. Ein Umschalter 402 und ein weiterer Umschalter 407 werden von der Kodiersteuerung 3 derart gesteuert, daß sie in der eingezeichneten Stellung verharren, wenn Differenzblöcke kodiert werden sollen, und daß sie anderenfalls (bei der direkten Kodierung der Eingangsblöcke) in ihre zweite Position gebracht werden.

Das Filter 409 in der Rückkopplungsschleife des Quellenkoders 4 kann wirksam geschaltet werden; der Schaltzustand dieses Filters 409 wird durch das Signal f signalisiert. Ein Bewegungsschätzer 410B führt mit Hilfe des Bildspeichers 410A eine Bewegungsschätzung durch. Das Ergebnis dieser Bewegungsschätzung sind die Komponenten eines zweidimensionalen Bewegungsvektors, dessen Daten auf der Leitung v weitergeleitet werden.

Für die Funktion der Filterschaltung 1 werden die Bewegungsvektoren gebraucht. Ebenfalls gebraucht werden makroblockweise die Daten des rekonstruierten und im Bildspeicher 410A abgelegten Videobildes. Deshalb ist der Ausgang des Bildspeichers 410A über eine Leitung a410 und der Ausgang des Bewegungsschätzers 410B über die Leitung v mit der Filterschaltung 1 verbunden.

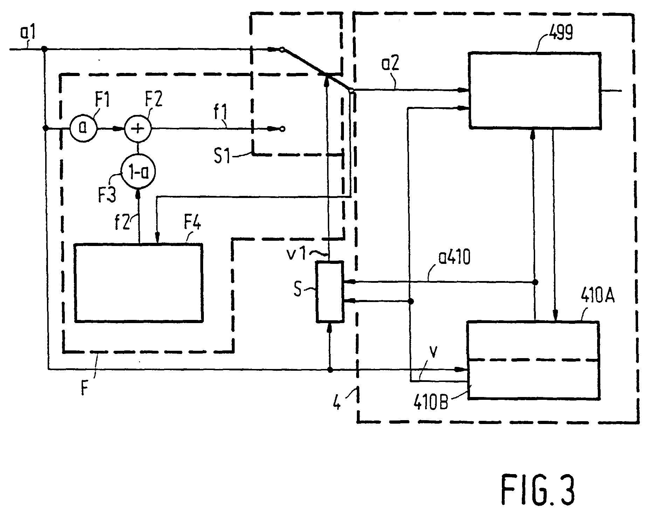

Fig. 3 zeigt Funktionseinheiten der Filterschaltung 1 von Fig. 1 und ihre Verbindungen mit dem Quellenkoder 4. Bei der Erläuterung der Filterschaltung 1 wird davon ausgegangen, daß alle Daten makroblockweise parallel anliegen und verarbeitet werden. Die angegebenen Leitungen haben daher so viele Adern wie ein Makroblock binäre Angaben zur Darstellung aller seiner Informationen enthält. Nicht angegeben werden Schaltungen, die für die notwendigen Taktsignale und deren Phasenrelationen sorgen, weil derartige Schaltungsanordnungen dem zuständigen Fachmann geläufig sind.

Hauptbestandteile der Filterschaltung 1 sind eine im folgenden auch als Multiplexer bezeichnete Umschalteinrichtung S1 mit zwei Eingängen al und fl, eine Steuerschaltung S und ein rekursives Filter F, das nur in einer Schaltstellung des Multiplexers SI wirksam wird, weil der Rückkopplungszweig des Filters F in der anderen Schaltstellung des Multiplexers S1 aufgetrennt ist.

Der Multiplexer S1 leitet entweder das Videosignal al an den Eingang des Quellenkoders 4 oder ein durch das Filter F gefiltertes Signal fl. Das Ausgangssignal a2 des Multiplexers S1 wird auch in einem Bildspeicher F4 des Filters F eingeschrieben.

Durch den Bildspeicher F4 wird das Signal a2 um eine Bildtaktperiode verzögert und als Signal f2 einem Multiplizierer F3 zugeführt, der das Signal f2 mit dem Faktor 1 - a multipliziert. Das Eingangssignal al wird durch einen weiteren Multiplizierer FI des Filters F mit dem Faktor a multipliziert. Die Ausgangssignale der Multiplizierer F3 und F1 werden durch einen Addierer F2 addiert und dem einen Eingang fl des Multiplexers S1 zugeführt.

Die Schaltstellung des Multiplexers S1 wird durch die Steuerschaltung S mit einem Steuersignal gesteuert. Die Eingangsdaten der Steuerschaltung S sind das Videosignal al, das rekonstruierte Signal a410, das gegenüber dem Videosignal al um eine Bildtaktperiode verzögert ist, und die Bewegungsvektoren v. Der Quellkodierer 4 in Fig. 3 ist gegenüber dem in Fig. 2 dargestellten Kodierer nur andeutungsweise wiedergegeben. Die Bezeichnung der Bausteine und der Leitungen ist die gleiche. Die Einheit 499 stellt eine Zusammenfassung aller Bausteine des Quellkodierers 4 dar, mit Ausnahme des Bildspeichers 410A und des Bewegungsschätzers 410B.

Bei der Berechnung eines Steuersignales für den Multiplexer S1 überprüft die Steuereinheit S, ob der Bewegungsvektor des aktuellen Makroblocks a1 der Nullvektor ist oder nicht.

Unter aktuellem Makroblock wird derjenige Makroblock verstanden, dessen Daten zu einem willkürlich gewählten Betrachtungszeitpunkt gerade am Eingang al der Schaltung nach Fig. 3 anstehen. Aus einem Vergleich des aktuellen Makroblocks mit Blöcken gleicher Größe, die jedoch zum rekonstruierten Vorgängerbild gehören und im Bildspeicher 410A gespeichert sind, ermittelt der Bewegungsschätzer 410B den Bewegungsvektor für den aktuellen Makroblock.

Ist dieser Bewegungsvektor v nicht der Nullvektor, bleibt der Multiplexer S1 in der in Fig. 3 eingezeichneten Stellung, d.h. es wird der ungefilterte aktuelle Makroblock al dem Quellenkoder 4 und dem Bildspeicher F4 zugeführt. Anderenfalls bildet die Steuereinheit S komponentenweise die Differenz zwischen dem aktuellen Makroblock und dem entsprechenden Makroblock des eine Bildtaktperiode zurückliegenden Bildes, das im Bildspeicher 410A des Quellenkodes 4 abgelegt ist.

Sodann werden von diesem Differenzblock komponentenweise die Beträge gebildet. Die Beträge werden zur Absolutnorm $\|D\|_1$ aufsummiert und mit einer ersten Schwelle T1 verglichen. Daneben wird geprüft, ob der Betrag einer jeden Komponente des Diferenzblocks kleiner oder gleich einer Schwelle T2 ist. Der Vergleich mit der Schwelle T2 ist äquivalent zu dem Vorgang, aus den Komponenten des Differenzblocks die Maximumnorm $\|D\|_{max}$ zu bestimmen und dann mit der Schwelle T2 zu vergleichen.

Das Wirksamschalten des Filters F läßt sich formelhaft durch die logische Konjunktion (Λ) von drei Bedingungen darstellen, nämlich:

$$(\|S\|_1 \leq T_1) \wedge (\|S\|_{max} \leq T2) \wedge (V = 0) .$$

Sind alle drei Bedingungen gleichzeitig erfüllt, wird der Ausgang a2 des Multiplexers S1 mit dem Eingang f1 verbunden; anderenfalls bleibt die Verbindung wie in Fig. 3 eingezeichnet.

Wie sich gezeigt hat, müssen nicht alle Daten der Datenblöcke zur Bestimmung der beiden Normen herangezogen werden. Eine Beschränkung auf die Luminanzwerte liefert bei geringerem Rechenaufwand gleichgute Ergebnisse.

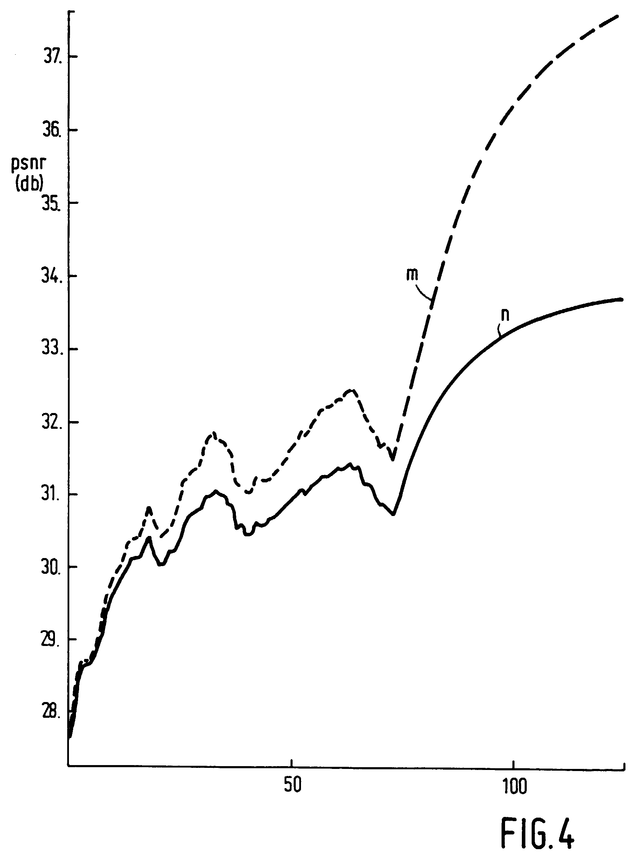

Fig. 4 zeigt das Ergebnis der Analyse eines Signals, das mit einem Hybrid-Kodierer kodiert und anschließend decodiert wurde. Die Funktionsweise des Hybrid-Kodierers wurde durch einen Rechner simuliert. Die Kodierung des Signals erfolgte einmal mit erfindungsgemäßer Filterschaltung (Kurve m) und einmal ohne Filterschaltung (Kurve n). Bei dem Signal handelte es sich um eine in der Bildkodierung verwendete Standardbildsequenz (Salesman). In Fig. 4 sind die Nummern der verarbeiteten Bilder gegen das in der Kodierung übliche Spitzen-Signal-Rausch-Verhältnis psnr aufgetragen, das durch

$$psnr = 10 \log 255^2/\sigma^2$$

definiert ist, wobei 255 die höchste Zahl ist, mit der ein Signalwert dargestellt wird, und σ die Varianz des dekodierten Signales bedeutet.

Ab der Bildnummer 75 wird das 75. Bild der Folge von Bewegtbildern laufend wiederholt, so daß sich eine in ein Standbild auslaufende Bewegtbildszene ergibt. Ohne Filterschaltung erreicht die psnr-Kurve n nach einer Einschwingzeit einen Grenzwert bei 34 db, wenn das Eingangssignal a1 von einem unkorrelierten Rauschen mit Gauß'scher Verteilung bei einer Varianz von σ = 5 überlagert wird. Eine Verbesserung ergibt sich für die Kurve m schon während der Bewegtbildszene. Der Filterparameter a wurde zu 0,5 gewählt. Der Grenzwert, den die Kurve m nach der Einschwingzeit erreicht, liegt über 38 db. Die deutliche Verbesserung, die eine Verwendung einer erfindungsgemäßen Filterschaltung bringt, ist klar erkennbar.

Die Funktionen der erfindungsgemäßen Filterschaltung sowie die des Hybrid-Kodierers können ganz oder teilweise von einem programmierten Signalprozessor übernommen werden. Hilfe bei der Umsetzung von Funktionsangaben in Programme kann sich der Fachmann aus folgenden Druckschriften holen:

[1] Fliege, N.: "Digitale Filter mit dem Signalprozessor 2920". Elektronik (1981), Seiten 81 bis 85 und Seiten 89 bis 94.
[2] Müller, K.-H.: "Echtzeitsimulation mit dem Analog-Prozessor 2920". Elektronik (1981), Seiten 95 bis 98.
[3] Signal Processing Algorithms. Prentice-Hall., Inc., Englewood Cliffs, New Jersey 07632.
[4] Oberhofer, A.: "Zustandsregelung mit digitalen Filtern". Elektronik (1985), Seiten 63 bis 68.
[5] Handbücher der Daisy Systems Corporation "Simulation Compilation". August 1988 und "Daisy Behavioral Language". September 1988
[6] Handbuch der Data I/O Corporation, January 1989, ISDN 984-0029-002, Seiten 10 - 28 und 10 - 30.

**Patentansprüche**

1. Anordnung zur Kodierung von Videosignalen mit einer Kodiereinrichtung und einer Filterschaltung (F), welche dazu vorgesehen ist, aus einem Videosignal (al) durch temporale Filterung ein gefiltertes Videosignal (fl) zu erzeugen, welches dem Eingang der Kodiereinrichtung (4) zugeführt ist, und bei der vorgesehen ist mittels eines in der Kodiereinrichtung (4) erzeugten Steuersignals (v1) die dem Eingang der Kodiereinrichtung (4) zugeführten Signale zu beeinflussen,
   dadurch gekennzeichnet, daß die Anordnung eine Steuereinrichtung (S), einen Bewegungsschätzer (410B) und eine Umschalteinrichtung (S1) aufweist und
   daß vorgesehen ist, das Steuersignal (v1) mittels der Steuereinrichtung (S) zu erzeugen, der die Bewegungsvektoren des Bewegungsschätzers (410B) zugeführt sind und deren Steuersignal (v1) auf die zwischen Filterschaltung (F) und Kodiereinrichtung (4) zwischengeschaltete Umschalteinrichtung (S1) derart einwirkt, dass bei einem Bewegungsvektor, der einem Nullvektor entspricht, das ungefilterte Videosignal (al) und bei einem Bewegungsvektor, der ungleich einem Nullvektor ist, das von der Filterschaltung (F) gefilterte Videosignal (fl) der Kodiereinrichtung (4) zugeführt wird.

2. Anordnung zur Kodierung von Videosignalen nach Anspruch 1,
dadurch gekennzeichnet,
daß die Kodiereinrichtung (4) dazu vorgesehen ist, das dem Eingang der Kodiereinrichtung (4) zugeführte Videosignals (a2) datenblockweise zu kodieren und der Bewegungsschätzer (410B) zu einer datenblockweise Bewegungsschätzung vorgesehen ist.

3. Anordnung zur Kodierung von Videosignalen nach Anspruch 1 oder 2 ,
dadurch gekennzeichnet,
daß zur Erzeugung des Steuersignals (vl) vorgesehen ist, der Steuervorrichtung (S) die Daten eines zu kodierenden Datenblocks (al) und die Daten eines dekodierten Datenblocks (a410) zuzuführen, und durch komponentenweise Subtraktion Differenzblöcke zu bilden, von jedem Differenzblock die Absolutnorm $\|D\|_1$ und/oder die Maximumsnorm $\|D\|_{max}$ zu bilden und das Steuersignal (v1) nur dann zu erzeugen, wenn folgende Bedingungen zusätzlich erfüllt sind:

- die Absolutnorm eines Differenzblocks ist kleiner oder gleich einer ersten Schwelle (T1) und/oder
- die Maximumnorm eines Differenzblocks ist kleiner oder gleich einer zweiten Schwelle (T2).

4. Anordnung zur Kodierung von Videosignalen nach Anspruch 3,
dadurch gekennzeichnet,
daß bei der Bestimmung der Normen $\|D\|_1$, $\|D\|_{max}$ nur die Luminanzdaten verwendet werden.

5. Anordnung zur Kodierung von Videosignalen nach Anspruch 3 oder 4,
dadurch gekennzeichnet,
daß statt der Bildung der Maximumnorm $\|D\|_{max}$ die Beträge aller Komponenten des Differenzblocks daraufhin überprüft werden, ob sie die zweite Schwelle (T2) unterschreiten.

6. Anordnung zur Kodierung von Videosignalen nach einem der vorhergehenden Ansprüche,
dadurch gekennzeichnet, daß sie einen programmierten Signalprozessor aufweist und daß die angegebenen Funktionen ganz oder teilweise von diesem programmierten Signalprozessor ausgeführt werden.

7. Bildtelefon mit einer Anordnung zur Kodierung von Videosignalen nach einem der Ansprüche 1 bis 6.

## Claims

1. An arrangement for coding video signals by means of a coding device and a filter circuit (F) for generating a filtered video signal (fl) from a video signal (al) by temporal filtering, which filtered video signal is applied to the input of the coding device (4) for influencing the signals applied to the input of the coding device (4) by means of a control signal (v1) generated in the coding device (4), characterized in that the arrangement comprises a control device (5), a motion estimator (410B) and a switching device (S1) and in that the control signal (v1) is generated by means of the control device (S) which receives the motion vectors of the motion estimator (410B) and whose control signal (v1) has such an effect on the switching device (S1) arranged between the filter circuit (F) and the coding device (4) that the unfiltered video signal (al) is applied to the coding device (4) in the case of a motion vector corresponding to a zero vector, and the video signal (fl) filtered by the filter circuit (F) is applied to the coding device (4) in the case of a motion vector which is unequal to a zero vector.

2. An arrangement for coding video signals as claimed in claim 1, characterized in that the coding device (4) is provided for coding the video signal (a2) applied to the input of the coding device (4) in data blocks, and the motion estimator (410B) is provided for a data blockwise motion estimation.

3. An arrangement for coding video signals as claimed in claim 1 or 2, characterized in that, for generating the control signal (v1), the control device (S) receives the data of a data block (al) to be coded and the data of a decoded data block (a410) and in that difference blocks are formed by subtraction in components, the absolute value $\|D\|_1$ and/or the maximum value $\|D\|_{max}$ are formed from each difference block, and the control signal (v1) is only generated when the following conditions are additionally satisfied:

- the absolute value of a difference block is smaller than or equal to a first threshold (T1), and/or
- the maximum value of a difference block is smaller than or equal to a second threshold (T2).

4. An arrangement for coding video signals as claimed in claim 3, characterized in that only the luminance data are used for determining the values $\|D\|_1$, $\|D\|_{max}$.

**5.** An arrangement for coding video signals as claimed in Claim 3 or 4, characterized in that, instead of forming the maximum value $\|D\|_{max}$, the values of all components of the difference block are checked on whether they fall below the second threshold (T2).

**6.** An arrangement for coding video signals as claimed in any one of the preceding Claims, characterized in that it comprises a programmed signal processor and in that the indicated functions are completely or partly performed by this programmed signal processor.

**7.** A videophone comprising an arrangement for coding video signals as claimed in any one of claims 1 to 6.

**Revendications**

**1.** Dispositif de codage de signaux vidéo avec un dispositif de codage et un circuit de filtrage (F) qui est prévu pour produire à partir d'un signal vidéo (a1) un signal vidéo (f1) filtré par filtrage temporel, signal qui est amené à l'entrée du dispositif de codage (4) et qui prévoit, à l'aide d'un signal de commande (v1) produit dans le dispositif de codage (4), d'influencer les signaux amenés à l'entrée du dispositif de codage (4),
caractérisé en ce que le dispositif présente un dispositif de commande (S) et un évaluateur de mouvement (410B) et un dispositif de commutation (S1) et qu'il est prévu de produire le signal de commande (v1) à l'aide du dispositif de commande (S), auquel sont amenés les vecteurs de mouvement de l'évaluateur de mouvement (410B) dont le signal de commande (v1) agit sur le dispositif de commutation (S1) monté entre le circuit de filtrage (F) et le dispositif de codage (4) de telle sorte que, pour un vecteur de mouvement qui correspond à un vecteur zéro, le signal vidéo non filtré (a1) et, pour un vecteur de mouvement qui est différent d'un vecteur zéro, le signal vidéo (f1) filtré par le circuit de filtrage (F) est amené au dispositif de codage (4).

**2.** Dispositif de codage de signaux vidéo selon la revendication 1,
caractérisé en ce que le dispositif de codage (4) est prévu pour coder par blocs de données le signal vidéo (a2) amené à l'entrée du dispositif de codage (4) et l'évaluateur de mouvement (410B) est prévu pour une évaluation de mouvement sous forme de blocs de données.

**3.** Dispositif de codage de signaux vidéo selon l'une des revendications 1 ou 2, caractérisé en ce qu'en vue de la production du signal de commande (v1), il est prévu d'amener au dispositif de commande (S) les données d'un bloc de données à coder (a1) et les données d'un bloc de données décodé (a410) et de former par soustraction sous forme de composantes des blocs différentiels, de former à partir de chaque bloc différentiel la norme absolue $\|D\|_1$ et/ou la norme maximale $\|D\|_{max}$ et de produire le signal de commande (v1) uniquement lorsque les conditions suivantes sont remplies simultanément :

- la norme absolue d'un bloc différentiel est inférieure ou égale à un premier seuil (T1), et/ou
- la norme maximale d'un bloc différentiel est inférieure ou égale à un deuxième seuil (T2).

**4.** Dispositif de codage de signaux vidéo selon la revendication 3,
caractérisé en ce que seules les données de luminance sont utilisées pour la détermination des normes $\|D\|_1$ et $\|D\|_{max}$.

**5.** Dispositif de codage de signaux vidéo selon l'une des revendications 3 ou 4, caractérisé en ce, que, au lieu de la formation de la norme maximale $\|D\|_{max}$, les montants de toutes les composantes du bloc différentiel sont contrôlés pour vérifier s'ils passent sous le deuxième seuil (T2).

**6.** Dispositif de codage de signaux vidéo selon l'une des revendications précédentes,
caractérisé en ce qu'il présente un processeur de signaux et que les fonctions indiquées sont exécutées en tout ou en partie par ce processeur de signaux programmé.

**7.** Vidéophone doté d'un dispositif de codage de signaux vidéo selon l'une des revendications 1 à 6.

FIG.1

FIG.2

FIG.3

FIG.4